Europäisches Patentamt

European Patent Office

Office européen des brevets

(19)

(11) Numéro de publication : **0 489 610 B1**

(12) **FASCICULE DE BREVET EUROPEEN**

(45) Date de publication du fascicule du brevet :
20.04.94 Bulletin 94/16

(51) Int. Cl.⁵ : **E05F 15/00, H01H 03/14, H01H 9/16, H01H 3/14, H01B 7/10, F16P 3/12**

(21) Numéro de dépôt : 91403071.3

(22) Date de dépôt : 15.11.91

(54) **Dispositif de détection du pincement et/ou de la coupure d'un joint résistif.**

(30) Priorité : 05.12.90 FR 9015216

(43) Date de publication de la demande :
10.06.92 Bulletin 92/24

(45) Mention de la délivrance du brevet :
20.04.94 Bulletin 94/16

(84) Etats contractants désignés :
DE GB IT

(56) Documents cités :
EP-A- 0 301 442
EP-A- 0 334 028
WO-A-89/00442
DE-A- 3 737 791

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Loth, Siri Yuth**
**1, allée Chanteclair**
**F-95350 Saint Brice Sous Foret (FR)**

(74) Mandataire : **Pinchon, Odile et al**
**PSA Peugeot Citroen Département OPS/BPI**
**18, rue des Fauvelles**
**F-92250 La Garenne Colombes (FR)**

Jouve, 18, rue Saint-Denis, 75001 PARIS

## Description

L'invention concerne un dispositif de détection du pincement et/ou de la coupure d'un joint résistif selon le préambule de la revendication 1. Un tel dispositif est connu du document EP-A-334028. Les joints résistifs, c'est-à-dire des joints constitués d'un tube souple comportant deux faces intérieures résistives de l'électricité disposées en face l'une de l'autre et isolées électriquement l'une de l'autre. Lorsque le joint est pincé, le tube souple se déforme et les deux faces viennent en contact électrique.

Il en résulte que le pincement du joint peut être détecté en surveillant la modification d'un circuit électrique comprenant les deux faces résistives précitées.

De tels joints peuvent être utilisés par exemple comme détecteurs de fin de course ou interrupteurs de sécurité, en particulier pour des dispositifs de fermeture de baies ou d'ouvertures telle que des fenêtres ou des toits ouvrants d'automobile.

Si le joint résistif vient à être coupé, c'est-à-dire qu'au moins l'une des faces est coupée, le circuit électrique de détection du pincement est modifié et cela entraîne généralement un fonctionnement erronné, ce qui peut être la cause d'accidents, dans la mesure où le joint résistif constitue un élément de sécurité. Il est donc nécessaire de pouvoir détecter non seulement le pincement du joint mais aussi sa coupure afin de fournir une alarme et éviter un mauvais fonctionnement.

On a déjà proposé un circuit électrique dans lequel les deux faces résistives sont mises en série avec une première résistance branchée entre les deux faces, une deuxième résistance étant mise en série avec l'ensemble qui est alimenté par une source de courant continu. La surveillance de la tension au point commun à la deuxième résistance et à la face voisine permet de détecter soit la coupure, soit le pincement du joint.

Ce dispositif présente l'inconvénient qu'il est nécessaire d'adapter la valeur de seuil du détecteur de pincement en fonction de la longueur du joint résistif, c'est-à-dire de la résistance des faces.

Pour éviter cet inconvénient, on a conçu d'autres circuits avec un pont comportant quatre redresseurs commandés et une diode ; la détection d'un pincement est réalisée en actionnant deux des redresseurs commandés du pont et la détection d'une coupure en actionnant les deux autres redresseurs commandés du pont précité. Ce dispositif est coûteux en composants et, de plus, son fonctionnement nécessite un séquencement des deux détections. Enfin, ce dispositif ne permet pas la détection d'un joint coupé si le joint est également pincé.

La présente invention se propose de fournir un dispositif de détection de la coupure et/ou du pincement d'un joint résistif qui peut être utilisé sans aucune modification pour une grande gamme de longueurs du joint résistif et dans lequel la détection d'une coupure n'est pas affectée par le pincement simulané du joint.

L'invention a pour objet un dispositif de détection du pincement et/ou de la coupure d'un joint résistif comportant deux faces internes résistives qui sont opposées l'une à l'autre et normalement isolées l'une de l'autre et viennent en contact lors du pincement du joint, la détection s'effectuant par la modification de la valeur d'un pont de résistances incluant les faces précitées, caractérisé en ce qu'il comporte deux ponts de résistances montés en parallèle entre une première borne et une deuxième borne d'une source de tension continue, chaque pont comprenant en série une résistance aval reliée au premier pôle de la source, une des faces résistives et une résistance amont reliée au deuxième pôle de la source de courant continu, la résistance amont de l'un quelconque des ponts étant supérieure à 10 fois la résistance des faces, les résistances amont étant de de valeurs différentes, le rapport de leurs valeurs de résistance étant au moins égal à quelques unités, en ce qu'un détecteur de pincement est relié à la borne commune à la résistance amont de valeur la plus élevée et à la face correspondante et en ce qu'un détecteur de coupure est relié à chacune des bornes communes à une face et à une résistance amont.

Selon une autre caractéristique de l'invention, les deux détecteurs de coupure sont branchés sur un circuit logique OU.

Selon encore une autre caractéristique de l'invention, la résistance amont de valeur élevée a une résistance supérieure ou égale à 3,5 fois la valeur de l'autre résistance amont.

Selon encore une autre caractéristique de l'invention, la résistance amont de valeur la plus élevée a une résistance supérieure ou égale à deux fois la valeur des résistances aval.

Avantageusement, les deux résistances aval ont la même valeur.

D'autres caractéristiques et avantages de l'invention ressortiront mieux de la description qui suit d'un exemple de réalisation, faite en se référant aux dessins annexés sur lesquels :
- les figures 1 et 2 représentent en perspective et en coupe transversale un joint résistif ;
- les figures 3 et 4 sont des schémas explicatifs du joint résistif au repos ;
- les figures 5 et 6 sont des figures explicatives du joint résistif à l'état de pincement ;
- la figure 7 est le schéma d'un premier dispositif connu de détection de pincement et on de coupure ;
- la figure 8 est le schéma d'un deuxième dispositif connu de détection de pincement et de coupure d'un joint résistif ;
- la figure 9 représente de manière schématique un dispositif de détection de pincement et ou de coupure selon l'invention ;
- la figure 10 est un schéma de détail du schéma de la figure 9 ;
- les figures 11 et 12 sont des schémas explicatifs du dispositif des figures 9 et 10 ; et
- la figure 13 est un schéma illustrant le cas d'une coupure avec pincement.

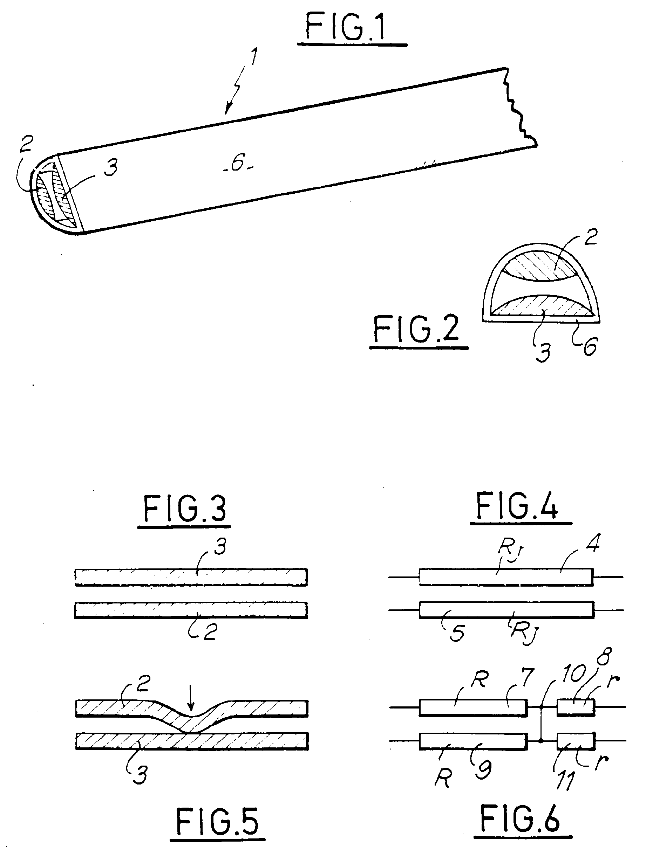

Comme on peut le voir sur les figures 1 et 2, un joint résistif est constitué d'un tube souple 1, par exemple en caoutchouc, qui comporte à l'intérieur deux faces 2 et 3 disposées l'une face à l'autre. Ces deux faces sont résistives, c'est-à-dire qu'elles sont électriquement conductrices et sont normalement isolées électriquement l'une de l'autre.

Les figures 3 et 4 montrent les deux faces faces résistives 2 et 3 au repos et, du point de vue électrique, on a à faire à deux résistances égales 4 et 5 complètement isolées l'une de l'autre.

Il est évident que la résistance totale d'une face 2 ou 3 est proportionnelle à sa longueur et que, par conséquent, la résistance totale de chacune des faces d'un joint résistif peut varier dans de grandes proportions, compte tenu de la longueur de joint qui est utilisée.

Le joint résistif est disposé généralement dans un logement par sa face inférieure 6 supportant la face 3, la face portant la face 2 faisant saillie vers l'extérieur. Lorsque le joint est pincé, par contact avec un obstacle par exemple, c'est généralement la face 2 qui se déforme et qui vient en contact avec la face inférieure 3, comme cela est représenté à la figure 5.

Le schéma électrique équivalent est représenté à la figure 6 où on voit que les résistances 4 et 5 présentent un court-circuit entre elles schématisé en 10, les deux résistances initiales étant divisées de manière sensiblement semblable en deux résistances 7 et 8, respectivement 9 et 11, les résistances 7 et 9 d'une part et 8 et 11 d'autre part étant sensiblement égales.

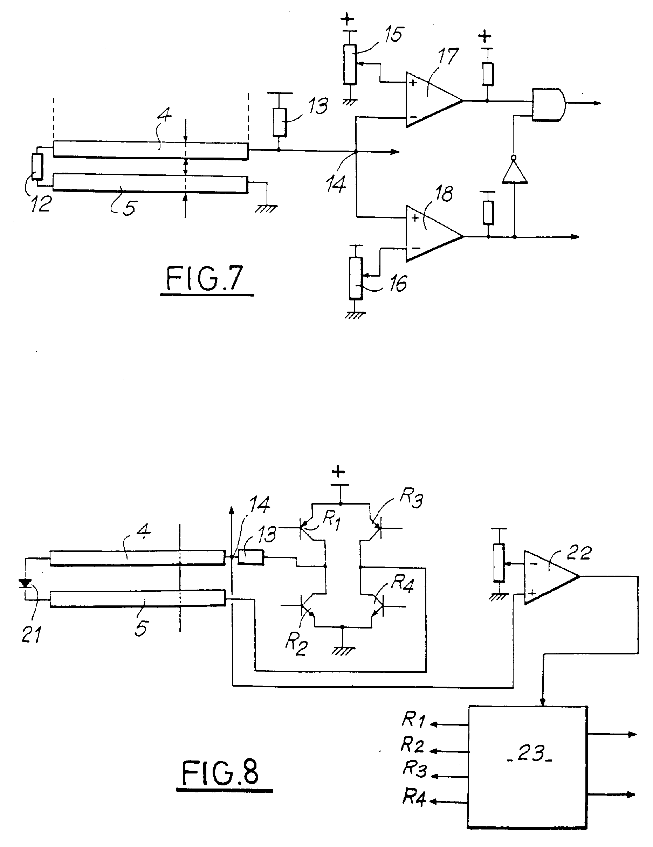

La figure 7 représente un premier circuit qui a été utilisé pour détecter le pincement et la coupure d'un joint résistif. Comme on peut le voir, on réalise un circuit série disposé entre les deux bornes d'une source d'alimentation, par exemple une batterie d'automobile dont le pôle négatif est mis à la masse. Le circuit comprend successivement en partant d'une des bornes de la source, par exemple la masse, la résistance 5 de la face 3, une résistance 12 branchée entre les deux faces 4 et 5, la résistance 4 de la face 2 et une deuxième résistance 13. La détection s'effectue au niveau du point commun 14 à la deuxième résistance 13 et à la face 2.

La tension présente à ce point 14 est comparée à une première tension de référence fournie par un potentiomètre 15 et à une deuxième tension de référence fournie par un potentiomètre 16. La détection s'effectue dans un comparateur 17, respectivement 18, qui reçoit d'une part la tension de référence fournie par le potentiomètre 15 respectivement 16 et la tension au point 14. La sortie du comparateur 18 est significative d'une coupure de joint et la sortie du comparateur 17 est significative d'un pincement de joint.

Les calculs montrent que lors du pincement du joint, la tension au point 14 varie en fonction de la longueur du joint, c'est-à-dire de sa résistance totale et de l'emplacement où s'effectue le pincement. Par conséquent, il est nécessaire de régler la tension de référence fournie par le potentiomètre 15 en fonction en particulier de la longueur du joint. En outre, lorsqu'il y a coupure du joint dans la partie de la résistance 4 disposée à gauche de l'emplacement du pincement, on ne peut détecter cette coupure.

Pour améliorer ce dispositif, on a proposé le schéma représenté sur la figure 8 dans lequel la résistance disposée entre les deux résistances 4 et 5 est remplacée par une diode 21 ; par ailleurs la tension continue est appliquée par l'intermédiaire d'un pont de redresseurs commandés R1,R2,R3 et R4.

Pour la détection de la coupure des résistances 4 et 5, on commande la conduction des redresseurs commandés R1 et R4 de manière que le courant circule dans la diode 21 ; pour la détection d'un pincement, on commande la conduction des redresseurs commandés R2 et R3, la diode 21 étant alors prise en inverse. La tension recueillie au point de connection 14 est envoyée sur un comparateur 22 qui reçoit par ailleurs une tension de référence et la tension de sortie du comparateur 22 est envoyée sur une unité logique 23 qui effectue une analyse des indications fournies par le comparateur 22 et qui commande la conduction des redresseurs commandés R1 à R4.

Ce dispositif est coûteux puisqu'il nécessite quatre redresseurs commandés, une diode et une unité logique. Par ailleurs son fonctionnement est plus difficile puisqu'il faut faire les détections de pincement puis de coupure de manière séquentielle. Enfin, ce circuit connu ne permet pas de détecter une coupure lorsqu'il y a maintien du pincement lorsque la coupure se trouve à droite du point de pincement.

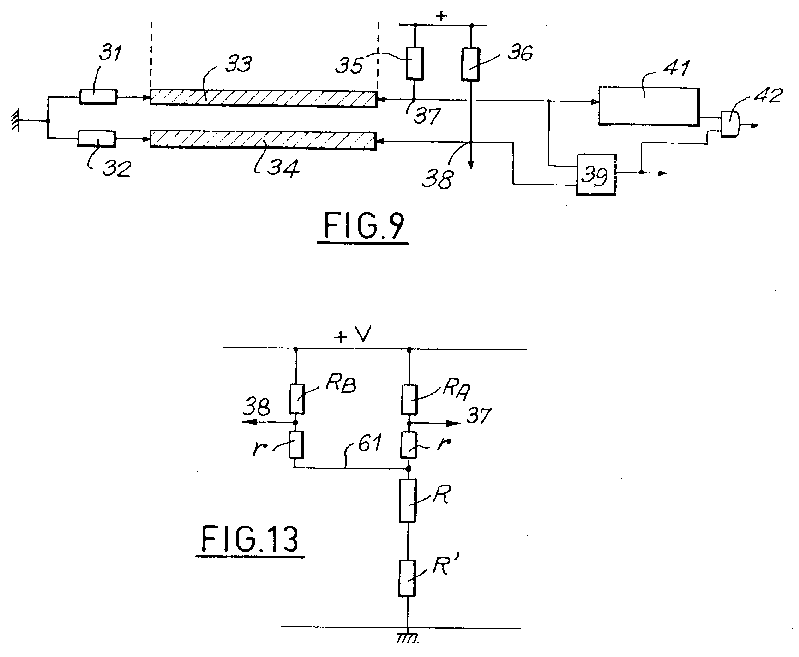

La figure 9 représente de manière schématique un dispositif conforme à la présente invention. On branche entre le pôle positif d'une tension d'alimentation et la masse deux ponts de résistances en série qui comprennent chacun une résistance aval 31, respectivement 32, une des faces 33, respectivement 34 du joint résistif et une résistance amont 35, respectivement 36. La tension aux points de connexions 37 respectivement 38 entre la résistance amont 35, respectivement 36, et la face du joint résistif 33, respectivement 34, est recueillie

3

et utilisée pour la détection d'une coupure d'un pincement.

La détection de la coupure s'effectue à chacun des deux points de connexion 37 et 38 de manière à détecter la coupure du joint même si une seule des faces résistives 33 ou 34 est coupée. Les deux signaux obtenus représentatifs d'une coupure de la face 33 ou 34 sont combinés dans un circuit logique OU 39 qui fournit donc en sortie un signal indiquant qu'au moins une des faces 33 ou 34 est coupée.

La détection du pincement s'effectue sur un seul des points de connexions, le point de connexion 37; Ce signal est détecté dans un circuit détecteur 41. Selon l'invention, la priorité est donnée à la détection d'une coupure du joint et on prévoit à cet effet un circuit logique 42 qui ne fournit une indication de pincement que s'il n'y a pas d'indication de coupure du joint.

Les valeurs des résistances aval 31 et 32 et amont 35 et 36 sont choisies de manière que la valeur de la résistance d'une face du joint soit négligeable par rapport à celles de chacune de ces résistances additionnelles ; par exemple, chacune de ces résistances est au moins égale à cinquante fois la valeur de la résistance d'une face.

Par ailleurs ces résistances additionnelles ont des valeurs qui sont du même ordre de grandeur, les deux résistances amont 35 et 36 étant supérieures à la valeur des résistances aval 31 et 32. Enfin la résistance amont sur laquelle on détecte le pincement, la résistance 35 dans l'exemple représenté, a une valeur supérieure à celle de l'autre résistance amont 36, le rapport de leur valeur de résistance étant égal à quelques unités.

Sur la figure 11 on a représenté le schéma électrique de ces différentes résistances, $R_J$ étant la valeur de la résistance de chaque face du joint, R' étant la valeur des résistances aval 31 et 32 qui sont avantageusement égales et $R_A$ et $R_B$ étant les valeurs des résistances amont 35, respectivement 36. Les conditions qui viennent être énoncées peuvent être réalisées de la manière suivante :

$$R_A \gg R_J$$
$$R_A \cong 2\,R'$$
$$R_A \cong 3,5\,R_B$$

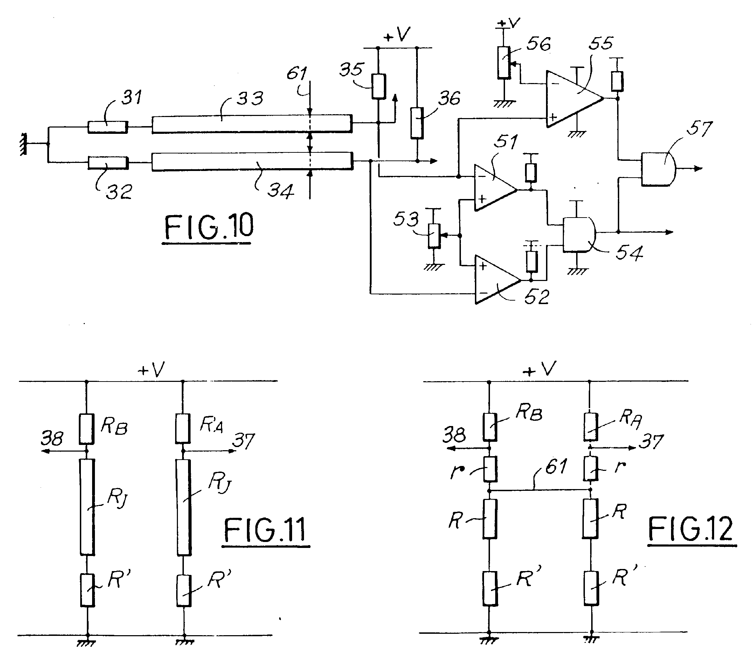

La figure 10 représente le schéma d'un mode de réalisation pratique de l'invention ; on retrouve les résistances 31 à 36 et les points de connexion 37 et 38, la tension appliquée sur les résistances amont 35 et 36 étant égale à +V. La tension à chaque point de connexion 37 et 38 est envoyée sur l'entrée inverseuse d'un comparateur 51, respectivement 52, qui reçoit sur son entrée non inverseuse une tension de référence fournie par un potentiomètre 53. La sortie de chacun des comparateurs 51 et 52 est envoyée sur un circuit logique ET 54.

La tension au point de connection 37 est également appliquée à l'entrée non inverseuse d'un troisième comparateur 55 qui reçoit sur son entrée inverseuse une tension de référence fournie par un potentiomètre 56. Les sorties du comparateur 55 et du circuit logique ET 54 sont envoyées sur un deuxième circuit logique ET 57 dont la sortie fournit le signal de pincement.

Le fonctionnement du circuit qui vient d'être décrit sera expliqué en référence aux figures 11 et 12 qui indiquent respectivement le schéma électrique lorsque le joint est au repos et lorsqu'il est pincé.

Si l'on se réfère à la figure 11, on peut écrire qu'au repos les tensions $V_1$ et $V_2$ aux points de connexion 37 et 38 sont définies par les équations suivantes :

$$V_{1R} = \frac{V\,(R_J + R')}{R_A + R_J + R'} = \frac{V}{1 + \dfrac{R_A}{R_J + R'}}$$

$$V_{2R} = \frac{R_J + R'}{R_B + R_J + R'} = \frac{V}{1 + \dfrac{R_B}{R_J + R'}}$$

Comme indiqué plus haut, la résistance $R_J$ est négligeable par rapport à la résistance R' et on obtient donc les valeurs suivantes :

$$V_{1R} = \frac{V}{1 + \dfrac{R_A}{R'}} \quad (1)$$

$$V_{2R} = \frac{V}{1 + \dfrac{R_B}{R'}}$$

Si l'on choisit pour les trois résistances additionnelles les valeurs d'égalité des inéquations définies plus haut, c'est-à-dire :

$$R_A = 2\,R'$$
$$R_A = 3,5\,R_B$$

dans ce cas, les valeurs $V_1$ et $V_2$ sont les suivantes :

$$V_{1R} = \frac{V}{3} = 0,33\ V$$

$$V_{2R} = \frac{V}{1,57} = 0,64\ V$$

Lorsqu'une des faces 33 ou 34 est coupée, la tension correspondante au point de connexion 37 ou 38, $V_1$ ou $V_2$ prend la valeur de la tension d'alimentation V, soit 12V dans l'exemple décrit, puisqu'aucun courant ne circule dans le pont de résistances correspondant.

Lorsque le joint est soumis à un pincement, le schéma électrique devient celui de la figure 12 où les résistances r et R représentent les résistances de la face en amont et en aval du point de pincement 61 ; la somme des valeurs r et R est sensiblement égale à $R_J$ qui est, selon les conditions fixées, négligeable par rapport aux résistances R', $R_A$ et $R_B$ ; il en résulte que les résistances r et R sont également négligeables par rapport respectivement à R' et $R_A$ et $R_B$. De ce fait, le schéma de la figure 12 peut être simplifié en se limitant aux deux résistances amont $R_A$ et $R_B$ en parallèle et aux deux résistances aval R' en parallèle. Par ailleurs, la tension au point de connexion 37 est très voisine de la tension au point de pincement 61. Par conséquent, la tension en $V_1$ recueillie au point de connexion 37 a une valeur sensiblement égale à :

$$V_{1P} = \frac{VR'}{2\left(\dfrac{R'}{2} + \dfrac{R_A R_B}{R_A + R_B}\right)}$$

ce qui peut s'écrire :

$$V_{1P} = \frac{V}{1 + \left(\dfrac{R_A}{R'} \times \dfrac{2R_B}{R_A + R_B}\right)} \qquad (2)$$

Pour que cette valeur soit supérieure à la valeur fournie par l'équation (1) correspondant à $V_1$ au repos, il faut que :

$$\frac{2R_B}{R_A + R_B} < 1$$

c'est-à-dire $R_A > R_B$, ce qui est une des caractéristiques du dispositif selon l'invention.

Si l'on prend les mêmes relations entre les résistances additionnelles $R_A$, $R_B$ et R' indiquées ci-dessus, on obtient la valeur suivante :

$$V_{1P} = \frac{V}{1,89} = 0,53\ V$$

cette valeur est supérieure à la valeur $V_{1R}$ de la tension $V_1$ au repos ; on peut donc détecter un pincement en comparant la valeur $V_1$ à une valeur de seuil comprise entre sa valeur au repos et sa valeur indiquée ci-dessus. Cette valeur calculée pour $V_{1P}$ est sa valeur minimale car si $R_A$ est supérieure à la valeur d'égalité 3,5 $R_B$, la valeur $V_{1P}$ augmente.

On peut donc par exemple réaliser un circuit de détection dans lequel le seuil de détection d'une coupure sera égal à 0,66 V et le seuil de détection d'un pincement 0,4 V. En effet, pour une coupure la tension aux points de connexion passe à une fois la valeur V et en cas de pincement la valeur au point de connexion 37 prend la valeur minimale 0,53 V.

On constate donc que lors de la coupure d'une des deux faces, la tension, $V_1$ ou $V_2$, aux points de connexion 37 ou 38 prend la valeur de la tension d'alimentation, ce qui peut être facilement détecté par l'un des comparateurs 51 et 52 qui fournissent un signal à un niveau bas lorsque la tension $V_1$ ou $V_2$ dépasse le seuil fixé par le potentiomètre 53 ; l'ensemble de ces deux comparateurs 51 et 52 et du circuit logique ET 54 constitue un circuit logique NON-OU fournissant à sa sortie un signal au niveau haut en l'absence de coupure et un signal de niveau bas lorsqu'il y a une coupure sur au moins l'une des faces.

Selon l'invention, la détection de joint coupé est prioritaire ; c'est pourquoi le signal de sortie du circuit logique ET 54 est envoyé à l'entrée du circuit ET 56 qui reçoit sur son autre entrée un signal logique au niveau haut s'il existe un pincement et au niveau bas s'il n'y a pas de pincement. De cette manière, la transmission du signal de détection d'un pincement est bloquée par le circuit ET 57 lorsqu'il existe un signal de détection de joint coupé.

La déposante a effectué des calculs pour une application numérique dans laquelle le joint résistif présente une résistance linéaire de 5 kiloohms par mètre. Dans cet exemple, la résistance R' des résistances aval est égale à 330 kiloohms et les résistances amont $R_A$ et $R_B$ ont respectivement les valeurs 680 kiloohms et 200 kiloohms.

Pour une alimentation de 12 V les calculs montrent que si la longueur du joint résistif est de 0,1 m, la tension au point de connexion 37 passe de la valeur au repos 3,93 V à 6,2 V pour une détection de pincement et la valeur au repos de la tension au point de connexion 38 est de 7,48 V.

Pour une longueur de joint résistif égale à 20 mètres, la tension au point de connexion 37 passe de la valeur 4,5 V à une valeur comprise entre 5,18 V et 6,97 V pour une détection de pincement suivant la position de ce dernier sur le joint résistif. La tension au deuxième point de connexion 38 passe de la valeur de repos 8,2 V à 12 V pour une détection de joint coupé.

On voit que même dans ces conditions extrêmes, on peut encore détecter le pincement ou la coupure du joint en fixant une valeur de référence pour le pincement égale à 5 V et une valeur de référence pour la coupure égale à 7,9 V.

La figure 13 représente un cas extrême dans lequel il se produit une coupure sur une seule face du joint et du côté de la masse par rapport au pincement. Le schéma est alors celui de la figure 13 qui dérive du schéma de la figure 12. Comme indiqué plus haut, compte tenu des valeurs respectives des différentes résistances, la tension aux points de connexion 37 et 38 est sensiblement égale à la tension existant au point de connexion 61 correspondant au pincement. Au point de connexion 61, on obtient, compte tenu des approximations déjà effectuées plus haut, la valeur suivante :

$$V_{2PC} = \frac{V}{1 + \left( \dfrac{R_A}{R'} \times \dfrac{R_B}{R_A + R_B} \right)} \qquad (3)$$

Compte tenu du fait que les deux résistances $R_A$ et $R_B$ sont telles que $R_A = 3,5R_B$, l'équation (3) donne pour une tension d'alimentation de 12 V :

$$V_{2PC} = 0,69 \text{ V.}$$

Il en résulte que la tension de référence fournie par le potentiomètre 53 doit être déterminée de la manière suivante :

$$V_{2R} < V(53) < V_{2PC}$$

c'est-à-dire :

$$0,64 \text{ V} < V(53) < 0,69 \text{ V.}$$

Par conséquent en choisissant un seuil de détection égal à 0,66 V on peut détecter une coupure du joint résistif même dans ce cas extrême qui vient d'être décrit.

On voit que l'invention permet de détecter de manière fiable un pincement et ou une coupure d'un joint résistif sans qu'il soit nécessaire de modifier les valeurs de seuil des comparateurs.

## Revendications

1. Dispositif de détection du pincement et/ou de la coupure d'un joint résistif (1-3) comportant deux faces internes résistives (2,3,33,34) qui sont opposées l'une à l'autre et normalement isolées l'une de l'autre et viennent en contact lors du pincement du joint, la détection s'effectuant par la détection de la modification d'un pont de résistances incluant les faces précitées, caractérisé en ce qu'il comporte deux ponts de résistances montés en parallèle entre une première borne et une deuxième borne d'une source de tension continue, chaque pont comprenant en série une résistance aval (31,32) reliée au premier pôle de la source, une des faces résistives (33,34) et une résistance amont (35,36) reliée au deuxième pôle de la source de courant continu, la résistance amont ($R_A$) de l'un quelconque des ponts étant au moins supérieure à 10 fois la résistance des faces résistives ($R_J$), les résistances amont ($R_A$,$R_B$) étant de valeurs différentes, le rapport de leurs valeurs de résistance étant au moins égal à quelques unités, en ce qu'un détecteur de pincement (41,55) est relié à la borne commune (37) à la résistance amont de valeur la plus élevée (35) et à la face correspondante (33) et en ce qu'un détecteur de coupure (39,51-54) est relié à chacune des bornes comnnunes (37,38) à une face (33,34) et à une résistance amont (35,36).

2. Dispositif de détection du pincement et/ou de la coupure d'un joint résistif selon la revendication 1, caractérisé en ce que les deux détecteurs de coupure sont branchés sur un circuit logique OU (51,52,54).

3. Dispositif de détection du pincement et/ou de la coupure d'un joint résistif selon la revendication 1 ou 2, caractérisé en ce que la résistance amont de valeur élevée (35) a une résistance ($R_A$) supérieure ou égale à 3,5 fois la valeur de l'autre résistance amont ($R_B$).

4. Dispositif de détection du pincement et/ou de la coupure d'un joint résistif selon l'une quelconque des revendications 1 à 3, caractérisé en ce que la résistance amont de valeur la plus élevée ($R_A$) a une résistance supérieure ou égale à deux fois la valeur des résistances aval (R').

5. Dispositif de détection du pincement et/ou de la coupure d'un joint résistif selon l'une quelconque des revendications 1 à 4, caractérisé en ce que les deux résistances aval (31,32) ont la même valeur (R').

6. Dispositif de détection du pincement et/ou de la coupure d'un joint résistif selon la revendication 2, caractérisé en ce que la sortie du circuit OU (51,52,54) est reliée à l'entrée d'un circuit ET (56) dont l'autre entrée reçoit la sortie du détecteur de pincement (55,56).

7. Dispositif de détection du pincement et/ou de la coupure d'un joint résistif selon l'une quelconque des revendications précédentes, caractérisé en ce que les détecteurs de coupure et de pincement sont constitués par des comparateurs.

8. Dispositif de détection du pincement et/ou de la coupure d'un joint résistif selon l'une quelconque des revendications précédentes, caractérisé en ce que la valeur ($R_A$) de la résistance amont la plus élevée (35) est approximativement égale à deux fois la valeur (R') des résistances aval (31,32) et 3,5 fois la valeur ($R_B$) de la résistance amont de valeur la moins élevée (36) et en ce que le seuil de détection du détecteur de pincement est approximativement égal à 0,4 fois la tension de la source continue et le seuil de détection du détecteur de coupure est approximativement égal à 0,66 fois la tension de la source de tension continue.

**Patentansprüche**

1. Vorrichtung zum Detektieren einer Quetschung und/oder eines Risses einer resistiven Verbindung (1-3), die zwei innere resistive Seiten (2, 3, 33, 34) aufweist, die einander gegenüberliegen und normalerweise elektrisch untereinander isoliert sind und bei einem Quetschen der Verbindung in Kontakt miteinander kommen, wobei das Detektieren durch das Detektieren der Veränderung einer Brücke mit Widerständen einschließlich der obengenannten Seiten erfolgt, dadurch gekennzeichnet, daß sie zwei Wiederstandsbrücken umfaßt, die zwischen einer ersten Klemme und einer zweiten Klemme einer Gleichstromquelle parallel geschaltet sind, wobei jede Brücke in Reihe geschaltet einen hinteren Widerstand (31, 32), der mit dem ersten Pol der Quelle verbunden ist, eine der resistiven Seiten (33, 34) und einen vorderen Widerstand (35, 36), der mit dem zweiten Pol der Gleichstromquelle verbunden ist, aufweist, wobei der vordere Widerstand ($R_A$) einer der Brücken mehr als 10 mal höher ist als der Widerstand der resistiven Seiten ($R_J$) , wobei die vorderen Widerstände ($R_A$, $R_B$) verschiedene Werte aufweisen, wobei das Verhältnis ihrer Widerstandswerte mindestens gleich einigen Einheiten ist, daß ein Quetschungsdetektor (41, 55) mit der gemeinsamen Klemme (37) des vorderen Widerstands mit dem höheren Wert (35) und der entsprechenden Seite (33) verbunden ist, und daß ein Rißdetektor (39, 51-54) mit jeder der gemeinsamen Klemmen (37, 38) der einen Seite (33, 34) und eines vorderen Widerstands (35, 36) verbunden ist.

2. Vorrichtung zum Detektieren einer Quetschung und/oder eines Risses einer resistiven Verbindung nach Anspruch 1, dadurch gekennzeichnet, daß die beiden Rißdetektoren mit einer logischen ODER-Schaltung (51, 52, 54) verbunden sind.

3. Vorrichtung zum Detektieren einer Quetschung und/oder eines Risses einer resistiven Verbindung nach Anspruch 1 oder 2,

dadurch gekennzeichnet, daß der vordere Widerstand mit höherem Wert (35) einen Widerstand ($R_A$) hat, der größer oder gleich dem 3,5-fachen des Werts des anderen vorderen Widerstands ($R_B$) ist.

4. Vorrichtung zum Detektieren einer Quetschung und/oder eines Risses einer resistiven Verbindung nach einem der Ansprüche 1 bis 3,
dadurch gekennzeichnet, daß der vordere Widerstand mit höherem Wert ($R_A$) einen Widerstand hat, der größer oder gleich dem 2-fachen des Werts der hinteren Widerstände (R') ist.

5. Vorrichtung zum Detektieren einer Quetschung und/oder eines Risses einer resistiven Verbindung nach einem der Ansprüche 1 bis 4,
dadurch gekennzeichnet, daß die beiden hinteren Widerstände (31, 32) den gleichen Wert (R') haben.

6. Vorrichtung zum Detektieren einer Quetschung und/oder eines Risses einer resistiven Verbindung nach Anspruch 2,
dadurch gekennzeichnet, daß der Ausgang der ODER-Schaltung (51, 52, 54) mit dem Eingang einer UND-Schaltung (56) verbunden ist, deren anderer Eingang die Ausgabe des Quetschungsdetektors (55, 56) empfängt.

7. Vorrichtung zum Detektieren einer Quetschung und/oder eines Risses einer resistiven Verbindung nach einem der vorhergehenden Ansprüche,
dadurch gekennzeichnet, daß die Riß- und Quetschungsdetektoren aus Komparatoren bestehen.

8. Vorrichtung zum Detektieren einer Quetschung und/oder eines Risses einer resistiven Verbindung nach einem der vorhergehenden Ansprüche,
dadurch gekennzeichnet, daß der Wert ($R_A$) des vorderen Widerstands mit höherem Wert (35) annähernd gleich dem Doppelten des Werts (R') der hinteren Widerstände (31, 32) und dem 3,5-fachen des Werts ($R_B$) des vorderen Widerstands mit niedrigerem Wert (36) ist, und daß der Detektionsschwellenwert des Riadetektors annähernd gleich dem 0,66-fachen der Spannung der Gleichspannungsquelle ist.

## Claims

1. A device for detecting the pinching and/or cutting of a resistive seal (1-3) comprising two resistive inner faces (2, 3, 33, 34) which are opposite one another and normally isolated from one another and come into contact when the seal is pinched, detection taking place through the detection of the modification of a resistance bridge including the aforementioned faces, characterised in that it comprises two resistance bridges fitted in parallel between a first terminal and a second terminal of a source of direct current, each bridge comprising in series a downstream resistor (31, 32) connected to the first pole of the source, one of the resistive faces (33, 34) and a downstream resistor (35, 36) connected to the second pole of the source of direct current, the upstream resistance ($R_A$) of any one of the bridges being at least 10 times greater than the resistance of the resistive faces ($R_J$), the upstream resistors ($R_A$, $R_B$) being of different values, the ratio of their resistance values being at least equal to a few units, in that a pinching detector (41, 55) is connected at the common terminal (37) to the upstream resistor with the highest value (35) and to the corresponding face (33) and in that a cutting detector (39, 51-54) is connected at each of the common terminals (37, 38) to a face (33, 34) and to an upstream resistor (35, 36).

2. A device for detecting the pinching and/or cutting of a resistive seal according to Claim 1, characterised in that both cutting detectors are connected to an OR logic circuit (51, 52, 54).

3. A device for detecting the pinching and/or cutting of a resistive seal according to Claim 1 or 2, characterised in that the upstream resistor with a high value (35) has a resistance ($R_A$) greater than or equal to 3.5 times the value of the other upstream resistance ($R_B$).

4. A device for detecting the pinching and/or cutting of a resistive seal according to any one of Claims 1 to 3, characterised in that the upstream resistor with the highest value ($R_A$) has a resistance greater than or equal to twice the value of the downstream resistors (R').

5. A device for detecting the pinching and/or cutting of a resistive seal according to any one of Claims 1 to 4, characterised in that both downstream resistors (31, 32) have the same value (R').

6.  A device for detecting the pinching and/or cutting of a resistive seal according to Claim 2, characterised in that the output of the OR circuit (51, 52, 54) is connected to the input of an AND circuit (56), the other input of which receives the output of the pinching detector (55, 56).

7.  A device for detecting the pinching and/or cutting of a resistive seal according to any one of the preceding claims, characterised in that the cutting and pinching detectors are constituted by comparators.

8.  A device for detecting the pinching and/or cutting of a resistive seal according to any one of the preceding claims, characterised in that the value ($R_A$) of the highest upstream resistor (35) is approximately equal to twice the value (R') of the downstream resistors (31, 32) and 3.5 times the value ($R_B$) of the upstream resistor with the least high value (36) and in that the detection threshold of the pinching detector is approximately equal to 0.4 times the voltage of the source of direct current and the detection threshold of the cutting detector is approximately equal to 0.66 times the voltage of the source of direct current.

## FIG.1

## FIG.2

## FIG.3

## FIG.4

## FIG.5

## FIG.6

FIG.7

FIG.8

FIG.9

FIG.13

FIG.10

FIG.11

FIG.12